# EUROPÄISCHE PATENTSCHRIFT

(11) **EP 2 100 829 B1**
(45) Veröffentlichungstag und Bekanntmachung des Hinweises auf die Patenterteilung: **01.08.2012**
(21) Anmeldenummer: 08004879.6
(22) Anmeldetag: 14.03.2008
(51) Int. Cl.: B65G 17/38, B65G 19/20, F16G 13/07

(54) **Gewichtsreduzierte Gabellasche für eine Gabellaschenkette**
Weight-reduced yoke strap for a yoke strap chain
Maillon à chape à poids réduit pour une chaîne de maillons à chape

(43) Veröffentlichungstag der Anmeldung: 16.09.2009
(73) Patentinhaber: RUD Ketten Rieger & Dietz GmbH u. Co. KG, 73432 Aalen-Unterkochen (DE)
(72) Erfinder: Rieger, Benjamin T., 73434 Aalen (DE); Wesch, Rupert, 73457 Esslingen (DE); Nuding, Andreas, 73312 Geislingen (DE)
(74) Vertreter: Grünecker, Kinkeldey, Stockmair & Schwanhäusser

(56) Entgegenhaltungen:
- DE-C- 977 330
- US-A- 1 660 354
- US-A- 1 979 592
- US-A- 3 359 815

## Beschreibung

Die Erfindung betrifft eine Gabellasche für eine Gabellaschenkette mit einer Verbindungsstange, an deren einem Ende eine Gelenkgabel mit zwei in Längsrichtung in Kettenradkontaktflächen endenden Gabelschenkeln angeordnet ist, wobei die Gabelschenkel jeweils wenigstens eine Aussparung aufweisen, die koaxial zu den Aussparungen des jeweils anderen Gabelschenkels angeordnet ist und sich im Wesentlichen senkrecht zu einer Förderebene erstreckt, und an deren anderem Ende ein Zapfen mit wenigstens einem Gelenkauge angeordnet ist.

Gabellaschen werden beispielsweise zum Aufbau von Förderketten zur Beförderung von losen Produkten wie Schüttgut eingesetzt. Die Gabellaschen sind durch Gelenkbolzen miteinander verbunden. Für die Förderung von schwerem Schüttgut, beispielsweise Kohle, werden Förderketten aus geschmiedeten Gabellaschen eingesetzt. Die Förderung findet mittels Mitnehmern oder Kratzeisen statt, die an den Gabellaschen befestigt sind.

Eine geschmiedete Gabellasche beschreiben beispielweise die DE 1 242 506 B1 und die DE 1 650 876 U1. An den Gelenkgabeln der gezeigten Gabellaschen ist ein Fortsatz angeordnet, an dem ein Mitnehmer bzw. ein Kratzeisen befestigt werden kann.

Die US 1,402,766, die US 2,272,837 und die US 4,636,181 zeigen Gabellaschenketten aus Blech, die kostengünstig hergestellt werden können, sich aber nicht für die Förderung großer Lasten eignen.

Die DE 977 330 offenbart eine Gabellaschenkette, deren Glieder durch die Zähne eines Kettenrades in und entgegen der Förderrichtung gehalten werden. Die Kettenzähne reichen dazu von den Endrundungen einer Gabellasche bis zu den rückwärtigen Schulterflächen der nächsten Gabellasche. Dies soll den Eingriff der Kettenradzähne an den Kettengliedern verbessern und eine Umkehr der Förderrichtung ermöglichen.

Bei der DE 1 685 979 U1 ist für eine einfache Montage der Förderkette der Mitnehmer in einen Schlitz eingelegt, der an einem Fortsatz der Gabellasche ausgebildet ist. Die beiden Seiten des Schlitzes und der Mitnehmer weisen Bohrungen auf, in die ein Splint zum Sichern des Mitnehmers eingelegt wird. Der Kopf des Splintes liegt im montierten Zustand am Ende eines Bolzens an, der Gelenkgabel und Zapfen benachbarter Kettenglieder miteinander verbindet. Auf diese Weise wird durch denselben Splint auch der Bolzen am Herausfallen gehindert.

Die DE 1 840 223 U1 zeigt eine geschmiedete Gabellasche, bei welcher der Bolzen zur Verbindung der Kettenglieder an einem Gabelschenkel über eine in eine Nut eingelegte Sicherungsscheibe gesichert ist und an dem anderen Gabelschenkel über einen in ein Sackloch eingelegten Haltestift. Der Mitnehmer wird an einem Kettenglied in einen Schlitz eingelegt und über einen U-förmigen Splint, der in zwei parallele Bohrungen eingesetzt wird, gesichert.

Die AT 280 881 B beschreibt Gabellaschen, die durch Gießen oder Schmieden hergestellt werden. Der Gelenkbolzen ist bei dieser Ausführung in einem Sackloch eingesetzt, das einen Gabelschenkel durchdringt und in dem zweiten Gabelschenkel endet. Der Bolzen ist durch einen Spannstift gesichert, der oberhalb des Bolzens in eine quer zum Sackloch verlaufende Bohrung eingesetzt ist.

Die US 3,641,831 befasst sich mit Kettengliedern für eine Gabellaschenkette, die zwischen einem Zapfen und einer Gelenkgabel zur Aufnahme des benachbarten Zapfens eine Aussparung aufweisen, in die ein Zahn eines gepaarten Kettenrades eingreifen kann. Da der Zahn in der Aussparung in und entgegen der Förderrichtung begrenzt ist, ist auch mit einem derartigen Kettenglied eine Umkehr der Förderrichtung möglich.

Bei der US 3,095,753 greift ein Kettenradzahn an dem Kettenglied in eine konisch geformte Aussparung, die beidseitig an dem Kettenradzahn anliegt. Ein sich in Längsrichtung erstreckender, in der Aussparung angeordneter Steg sorgt für eine Zentrierung des Kettengliedes auf dem Kettenrad.

Die JP 62 141 338 A beschreibt Gabellaschenkettenglieder, die für eine Erhhung der Fördereffizienz bogenförmig geformt sind, so dass sie mit konvexen Gleitflächen im Fördertrog aufliegen.

Zu hohe Belastungen können zu Brüchen in Gabellaschen führen. Aus dem Stand der Technik sind Gabellaschen bzw. Gabellaschenketten bekannt, die gegenüber seitlichen Belastungen verbessert sind.

Eine Gabellasche, bei der die Widerstandsfähigkeit gegen seitliche Kräfte verbessert ist, ist beispielsweise aus der DE 199 05 454 A1 bekannt. Der Arm, der einen Zapfen und eine Gelenkgabel miteinander verbindet, weist ein sich in Längsrichtung veränderndes Querschnittsprofil auf. Die Querschnittsfläche bleibt hingegen über die Länge des Arms gleich.

Die DE 102 26 087 A1 offenbart eine Gabellaschenkette mit Stiftgliedem, bei denen die Gelenkgabel über eine zylindrisch geformte Verbindungsstange mit dem Zapfen verbunden ist. Durch den zylindrischen Querschnitt der Verbindungsstange können längs oder quer auf die Gabellasche wirkende Kräfte gleichermaßen aufgenommen werden. Die Kettenräder weisen zur Aufnahme der Stiftglieder Nuten mit halbkreisförmigem Querschnitt auf.

Eine Gabellaschenkette für einen Stetigförderer, der eine Förderung in mehreren Ebenen ermöglicht, ist in der DE 297 21 296 gezeigt. Indem an einem Kettenglied die Achse der Öffnungen der Gabelschenkel zur Achse des Gelenkauges im Zapfen winkelversetzt angeordnet ist, sind die Kettenglieder in mindestens zwei Ebenen zueinander ablenkbar. Dadurch kann die Kette seitlichen Belastungen ausweichen. Die Förderung des Schutt- bzw. Kratzgutes erfolgt nur auf einer Ebene, weshalb auch nur die auf dieser Förderebene liegenden Kettenglieder mit Mitnehmern ausgestattet sind.

Die DE 656304 befasst sich mit einem Kettenrad für eine Gabellaschenkette mit einer Reihe von Zähnen sowie einer Reihe von Bolzen, zwischen welchen die Kettenglieder liegen. Durch die Bolzen ist die Kette gegen ein Abgleiten von der Verzahnung gesichert. Indem die Bolzen zwischen Kette und Kettenrad gelangtem Fördergut Raum bieten, um in eine Seite des Kettenrades auszuweichen, werden Krümmungen und ein Bruch der Kette vermieden.

Die JP 2002054694 A zeigt Kettenglieder für eine selbststützende Gabellaschenkette. Die Kettenglieder sind über Bolzen verbunden, die in den Gabellaschen in Langlöchern geführt sind. Werden Kettenglieder aufeinandergedrückt, rutscht der Zapfen eines Kettengliedes in die Gelenkgabel des benachbarten Kettengliedes in eine Tasche, die dem Zapfen angepasst ist und diesen gegen Verdrehen bzw. Verkippen stützt.

Die in der FR 2055876 A5 und der US 3,107,777 beschriebenen Gabellaschenkettenglieder sind über konkav geformte Bolzen verbunden, wobei die Bohrungen in den Zapfen konvexe Innenflächen aufweisen. Durch die Paarung der konkaven Bolzen mit den konvexen Bohrungen sind seitliche Drehbewegungen möglich, durch welche die Kette der Belastung durch Querkräfte ausweichen kann, ohne dass der Flächendruck in den Verbindungen der Kettenglieder steigt.

Die DE 697 22 198 T2 beschreibt eine Gabellaschenkette mit kegelförmigen Gelenkbolzen, durch die der Flächendruck bei einer Biegebeanspruchung der Kette auf die Gelenkbolzen und die mit ihnen in Berührung stehenden Gegenflächen verteilt wird. In weiteren Ausführungsformen ist die Kegelfläche des Bolzens konvex oder konkav geformt.

Die DE 1 876 313 U1 beschreibt eine Sicherung des Gelenkbolzens, durch die ein Auseinanderfallen der Kette bei einer Überlastung der Mitnehmer vermieden werden soll. Der Mitnehmer ist in einen Schlitz eingelegt. Zur Sicherung des Mitnehmers und des Bolzens wird ein Stift in eine Bohrung eingesetzt, die beide Seiten des Schlitzes, den Mitnehmer und den Bolzen durchringt.

Förderketten verschleißen aufgrund des Abriebs an den Gleitflächen der Gabellaschen, die auf dem Fördertrog aufliegen, und den Gelenkflächen zwischen Bolzen und Gabellaschen und an Kontaktflächen zwischen Kette und Kettenrad.

In der DD 286406 A5 ist ein Gabellaschenkettenglied für eine Kratzerkette gezeigt, dessen Standzeit durch die Formgestaltung verbessert wurde. Um den Verschleiß der aufliegenden Flächen zu verringern, bestehen die Kettenglieder aus einem ovalen Körper mit einer Grundplatte und einer Deckplatte. Diese Gestaltung hat eine Verbreiterung der Auflagefläche und damit eine Verringerung der Flächenpressung an dem Kettenglied zum Ziel.

Die DE 3 822 635 C1, die DE 8 808 581 U1 und die DE 2 844 546 A1 offenbaren Gabellaschenketten mit Lagerschalen. Die Kettenglieder weisen mit Bohrungen versehene Gelenkgabeln und Zapfen auf und werden über Gelenkbolzen miteinander verbunden, die in die Bohrungen der Gelenkgabeln und Zapfen eingeführt werden. Die teilkreisförmigen Lagerschalen werden in den Innenflächen der Bohrungen der Zapfen eingelegt und formschlüssig befestigt, so dass der in die Bohrung eingeführte Bolzen bei einer Zugbelastung der Kette auf der Lagerschale aufliegt.

Die FR 1522477A beschreibt ein Kettenglied für eine Gabellaschenkette, bei welcher der gesamte Umfang der Bohrung mit einer geschlossenen Lagerschale ausgekleidet ist.

Die US 5,121,831 zeigt Kettenglieder einer Gabellaschenkette, bei der sowohl in den Bohrungen der Gelenkgabel als auch In der Bohrung des Zapfens Lagerschalen eingelegt sind, die den in Zugrichtung durch den Bolzen belasteten Teil der Bohrungen bedecken.

Die US 3,673,794 beschreibt eine Laschenkette aus Blech mit einer einlegbaren Lagerschale. Die Laschenkette weist eine verschließbare Hülse und eine Gelenkgabel auf. Die beiden Schenkel der Gelenkgabel sind über einen Bolzen verbunden, der für die Verbindung mit dem benachbarten Kettenglied in dessen offene Hülse eingelegt wird. Die Hülse wird durch plastische Verformung geschlossen.

Ein Verschleiß der Förderkette führt zu einer Vergrößerung der Kettenteilung, wodurch Störungen im Umlauf der Kette um die Kettenräder entstehen. Ist die Kette über ein zulässiges Maß hinaus verschlissen, können Kettengelenklager brechen. Um diese Betriebsstörungen zu vermeiden, werden Verschleißanzeigen eingesetzt, durch welche die Ketten kontrolliert und ein unzulässiger Verschleiß frühzeitig erkannt werden kann.

Die DE 3 524 338 C2 beschreibt eine Verschleißanzeige mit mechanischen oder optischen Sensoren, welche die an der Kette befestigten Mitnehmer abtasten. Der Abstand zwischen den Sensoren entspricht einem Mehrfachen der Kettenteilung plus der zulässigen Längung durch Kettengelenkverschleiß. Bei Erreichen der Verschleißgrenze wird ein Signalgeber aktiviert.

Auch die in der DE 202 11 954 U1 beschriebene Vorrichtung sieht zur Bestimmung des Verschleißes eine Messung der Kettenlängung vor. Über die Länge der Laschenkette verteilt sind an einigen Kettenbolzen Signalgeber angeordnet. Die durch eine Empfangsstation von den vorbeilaufenden Signalgebern übermittelten Signale werden an eine Auswerteeinheit weitergegeben, die den Soll-Abstand zwischen den Signalgebern mit dem Ist-Abstand vergleicht und aus der Differenz den Verschleiß bestimmt.

Die in der DE 102 00 582 C1 beschriebene Prüfanordnung sieht vor, dass zwischen zwei auf einem Kettenbolzen gelagerten Laschen ein Prüfansatz an einer Lasche vorgesehen ist, der im unverschlissenen Zustand der Kette eine zerstörbar ausgebildete Prüfnase an der anderen Lasche übergreift. Bei einer Längung der Kette stoßen Prüfansatz und Prüfnase aufeinander und der Prüfansatz und/oder die Prüfnase werden zerstört. Mittels einer Prüfstation in Form einer Lichtschranke oder eines mechanischen Tasters kann die Zerstörung der Prüfnasen erfasst werden.

Die DE 100 36 014 C2 befasst sich mit dem Einsatz von Transponderchips, um Sicherheitsbauteile aus Stahl während des gesamten Zeitraums ihres praktischen Einsatzes identifizieren zu können. Ein energieloser, chipartiger Transponder wird dazu in einem Bereich eines Kettenglieds befestigt, der außerhalb der betriebsbedingten Beanspruchung liegt.

Ein weiteres bekanntes Problem von Förderketten ist die Verschmutzung der Kettenglieder und das Anhaften von Fördergut an den Kettengliedern bzw. im Fördertrog.

Bei der in der WO 2006/021461A1 beschriebenen Gabellaschenkette für die Lebensmittelindustrie sind Zapfen und Gelenkgabel der benachbarten Kettenglieder mit länglichen Aussparungen versehen, in die ein Verbindungsstift lose eingelegt werden kann. Auf diese Weise werden Spalten an der Kette vermieden und die Reinigung vereinfacht.

Die DE 962 416 zeigt geschweißte Kettenglieder, bei denen die Gabelschenkel und ein Arm mit einem Verbindungszapfen an einem sich über die gesamte Förderbreite erstreckenden Mitnehmer angeschweißt sind. Um ein Abheben der Kette auf im Fördertrog eingeklemmtem Fördergut zu verhindern, sind die Zugorgane der Kettenglieder wechselweise versetzt angeordnet.

Um große Kräfte, die während des Fördervorgangs auf die Gabellaschenkette wirken, aufnehmen zu können, werden Gabellaschen üblicherweise entsprechend größer dimensioniert. Aus den größeren Dimensionen resultiert ein hoher Materialaufwand, der das Gewicht der Gabellaschen erhöht. Im Weiteren hat auch der während des Fördervorgangs entstehende Verschleiß Gewichtszunahme der Gabellaschen zur Folge, da der durch Verschleiß entstehende Materialverlust üblicherweise durch größer dimensionierte Gabellaschen kompensiert wird.

Folglich liegt der Erfindung die Aufgabe zugrunde, eine hohe Festigkeit und Standzeit der Gabellasche bei gleichzeitig verringertem Gewicht zu erreichen.

Diese Aufgabe wird erfindungsgemäß für eine Gabellasche der eingangs genannten Art dadurch gelöst, dass in einer Richtung quer zur Längsrichtung der Gabellasche die Verbindungsstange im Querschnitt randseitig mit zwei durch einen Verbindungsabschnitt verbundenen Verstärkungswülsten versehen ist und dass an den in Längsrichtung gelegenen Enden der Gabelschenkel Kettenkontaktflächen vorgesehen sind, die jeweils durch einen quer zur Längsrichtung, in Richtung der Mittellinie der Aussparungen vorspringenden, randseitig angeordneten Verbreiterungssteg verbreitert sind.

Indem der Querschnitt der Verbindungsstange nur an den Stellen vergrößert wird, an denen der größte Anteil der Belastungen aufgenommen wird, wird eine Verkleinerung des Querschnitts der Verbindungsstange an anderen Stellen möglich. Auf diese Weise wird eine höhere Festigkeit der Gabellasche bei gleichzeitig verringertem Gewicht erreicht.

Die Verbreiterung der Kettenradkontaktflächen an der erfindungsgemäßen Gabellasche verringert die Flächenpressung, die über das Kettenrad auf die Gabellasche einwirkt. Durch die verringerte Flächenpressung werden Risse an den Kettenradkontaktflächen unwahrscheinlicher. Zudem können der Abrieb und die damit verbundenen Maßveränderungen, die durch den Verschleiß der Gabellaschen entstehen, verringert werden. Indem die Kettenradkontaktflächen durch örtlich begrenzte Fortsätze verbreitert werden, wird der zusätzliche Materialaufwand für die Gabellasche gering gehalten. Insgesamt wird also die Standzeit einer Gabellaschenkette bei gleichzeitiger Optimierung des Gewichtes der Gabellaschen erhöht.

Diese erfindungsgemäße Lösung kann mit den folgenden weiteren, jeweils für sich vorteilhaften Ausgestaltungsformen beliebig kombiniert und weiter verbessert werden:

In einer weiteren vorteilhaften Ausgestaltung der Gabellasche können sich die Verstärkungswulste in Längsrichtung von der Gelenkgabel bis zu dem Gelenkauge erstrecken. Dies ermöglicht, Querschnittsverjüngungen in Längsrichtung der Verbindungsstange zu vermeiden, und sorgt damit für eine gleichmäßigere Spannungsverteilung in der Verbindungsstange. Zudem kann durch diese Verbesserung die Anzahl unterschiedlicher Querschnitte der Gabellasche in Längsrichtung verringert und damit die Fertigung der Gabellasche vereinfacht werden.

Gemäß einer weiteren Verbesserung der erfindungsgemäßen Gabellasche können die Verstärkungswulste symmetrisch zu einer Linie angeordnet sein, die auf der Förderebene liegt und den Mittelpunkt der Aussparungen in den Gabelschenkeln mit dem Mittelpunkt des Gelenkauges verbindet. Durch diesen symmetrischen Aufbau der Verbindungsstange können quer zur Längserstreckung der Gabellasche von beiden Seiten gleich große Kräfte durch die Gabellasche aufgenommen werden. Eine derartige Gestaltung der Verbindungsstange eignet sich insbesondere für Gabellaschenketten, die auf der Förderebene in zwei Richtungen umgelenkt werden bzw. die in zwei verschiedene Richtungen fördern. Biegebeanspruchungen, die beispielsweise durch den Eingriff eines Kettenrades oder durch die Einwirkung von Fördergut auf der Förderebene oder quer zur Förderebene in die Verbindungsstange der Gabellasche eingeleitet werden, können bei einem symmetrischen Aufbau der Verbindungsstange nicht zu einem Verdrehen der Verbindungsstange führen, wodurch eine zusätzliche Beanspruchung der Gabellasche auf Torsion und eine Verschiebung der Förderstrecke entstehen könnte.

Gemäß einer weiteren vorteilhaften Ausgestaltung der Gabellasche ist die Verbindungsstange vollflächig mit einer geschmiedeten Oberfläche versehen. Indem bei der Fertigung der erfindungsgemäßen Gabellasche auf eine spanende Bearbeitung der Verbindungsstange nach dem Schmiedevorgang verzichtet wird, kann eine durchgängige Schmiedefaser an der Oberfläche der Verbindungsstange erreicht werden, welche die Festigkeit der Verbindungsstange erhöht, so dass beispielsweise quer oder längs zur Förderrichtung größere Biegebeanspruchungen aufgenommen werden können.

Die Verbreiterung der Kettenkontaktflächen an den Enden der Gabelschenkel kann als sichelförmiger Steg ausgeführt sein. Mit dem Profil einer Sichel ist der mittlere Abschnitt des Steges mit einem größeren Querschnitt versehen als die seitlichen Abschnitte, deren Querschnitt sich zum Ende hin verjüngt. Dieses veränderliche Profil des Steges entspricht einer Anpassung an die Beanspruchung der Kettenradkontaktfläche, die insbesondere in Längsrichtung der Gabellasche belastet wird. Indem der Querschnitt des Steges an die Größe der auf ihn wirkenden Lasten angepasst wird bzw. der Steg an den Stellen einen vergrößerten Querschnitt aufweist, die verstärktem Verschleiß ausgesetzt sind, wird das Materialvolumen an den Kettenradkontaktflächen bei gleicher Kraftübertragung verringert.

Die Kettenradkontaktflächen an den Enden der Gabelschenkel können gemäß einer weiteren Verbesserung der erfindungsgemäßen Gabellasche geschmiedet sein, um die Festigkeit der Kettenradkontaktfläche zu erhöhen und/oder das Fertigungsverfahren der erfindungsgemäßen Gabellasche zu verkürzen.

In einer weiteren vorteilhaften Ausgestaltung können an den quer zur Längsrichtung liegenden Seitenflächen der Verbindungsstange Zentrierflächen angeordnet sein, die sich in Längsrichtung erstrecken. Bei dem Passieren eines Kettenrades kann die Verbindungsstange über die Zentrierflächen in einen Spalt oder eine Tasche eingeführt und zentriert werden.

Eine Führung der Gabellasche ergibt sich durch einen schrägen Verlauf der Zentrierflächen und aufgrund ihrer symmetrischen Anordnung zur Bewegungsebene der Gabellaschen.

Gemäß einer weiteren Verbesserung der erfindungsgemäßen Gabellasche können die Zentrierflächen vierfach symmetrisch zur Verbindungsgeraden angeordnet sein. Indem auf beiden Seiten der Verbindungstange jeweils zwei Zentrierflächen eine Keilform zum Einführen in die Tasche bzw. einen Spalt eines Kettenrades bilden, kann auf beiden Seiten der Gabellasche ein Kettenrad eingreifen. Dies ermöglicht ein beidseitiges Umlenken bzw. Antreiben einer Gabellaschenkette aus erfindungsgemäßen Gabellaschen und damit die Realisierung komplexerer Förderstrecken.

Gemäß einer weiteren vorteilhaften Ausgestaltung können die Zentrierflächen auf den Verstärkungswülsten liegen. Auf diese Weise kann der vergrößerte Querschnitt der Verstärkungswulste für vergrößerte Kettenradkontaktflächen genutzt werden, um die Beanspruchung und den Verschleiß dieser Flächen zu verringern.

Gemäß einer weiteren Verbesserung der erfindungsgemäßen Gabellasche kann der Übergang von der Gelenkgabel zur Verbindungsstange mit einem Radius versehen werden, der größer ist als das etwa 5,8-fache des Verhältnisses der Breite der Gelenkgabel zur Breite der Verbindungsstange. Durch die Vergrößerung des Radius an dem Übergang zwischen der Gelenkgabel und der Verbindungsstange werden insbesondere bei seitlichen Belastungen der Gabellasche an den Übergang auftretende Spannungen verringert. Die Wahrscheinlichkeit des Auftretens von Rissen, die zu einem Bruch der Gabellasche führen können, wird durch diesen deutlich vergrößerten Radius deutlich verringert. Ein weiterer Vorteil dieser Verbesserung ist die Vermeidung von Verschmutzungen. Da die Gabellasche während des Fördervorgangs in Längsrichtung mit dem Zapfen voraus durch das Fördergut bewegt wird, kann sich bei einer herkömmlichen Gestaltung des Übergangs von der Gelenkgabel zur Verbindungsstange Fördergut an diesem Übergang aufstauen. Setzt sich dieses Fördergut an der Gelenkgabel bzw. der Verbindungsstange fest, kann es bis zum Kettenrad gelangen und den Eingriff des Kettenrades in die Gabellasche stören. Der vergrößerte Radius füllt den Winkel an dem Übergang zwischen Gelenkgabel und Verbindungsstange aus und führt das Fördergut während des Fördervorgangs nach außen in Richtung der an den Gabelkopf befestigten Mitnehmer.

In einer weiteren verbesserten Ausgestaltung der erfindungsgemäßen Gabellasche ist der Radius an den in der Gelenkgabel liegenden Enden der Gabelschenkel, die in Richtung des Zapfens weisen, größer als ein sechstel der lichten Weite zwischen den Gabelschenkeln. Ein derart vergrößerter Radius verringert die Spannungen an den Enden der Gabelschenkel, die bei seitlichen Belastungen der Gabelschenkel entstehen können. Damit verringert sich die Bruchgefahr in Bezug auf die Gabelschenkel. Zudem wird durch die vergrößerten Radien die Gefahr einer Ablagerung von Fördergut in der Gelenkgabel, welche die gelenkige Verbindung zwischen Gelenkgabel und benachbartem Zapfen stören würde, verringert.

In einer weiteren vorteilhaften Ausgestaltung kann der Zapfen oder die Verbindungsstange an einer einem Gabelschenkel zugeordneten und im Wesentlichen in Richtung der Gelenkgabel weisenden Seite eine gegenüber ihrer wenigstens unmittelbaren Umgebung unterschiedlich ausgestaltete Verschleißmarke aufweisen. Die Verschleißmarke stellt eine unveränderliche Markierung auf der Gabellasche dar, die sich während der gesamten Einsatzdauer einer Gabellaschenkette unverändert auf der Gabellasche verbleibt. Die Verschleißmarke kann so angeordnet sein, dass sie bei einer Verbindung einer Gabellasche mit einer benachbarten Gabellasche durch den Schenkel der benachbarten Gabellasche verdeckt wird. Nimmt die Länge der Gabelschenkel aufgrund des Verschleißes an den Kettenradkontaktflächen ab und/oder längt sich die Kette aufgrund des Verschleißes an den Gelenkflächen in den Aussparungen bzw. an dem die Gabellaschen verbindenden Gelenkbolzen, so dass der Zapfen einer Gabellasche aus der Gelenkgabel der benachbarten Gabellasche herauswandert, tritt die Verschleißmarke unter dem Gabelschenkel hervor und zeigt das Erreichen einer definierten Verschleißgrenze der Gabellaschenkette an.

In einer vorteilhaften Ausgestaltung einer erfindungsgemäßen Gabellasche kann der Verschleiß über optische oder mechanische Sensoren, die entlang der Förderstrecke angeordnet sind, festgestellt werden, ob die Verschleißmarke der Gabellasche außerhalb der Gelenkgabel der benachbarten Gabellasche liegt. Dies ermöglicht eine automatisierte Weitergabe des Verschleißzustandes der Gabellaschen zum Beispiel an ein zentrales Steuersystem der Fördervorrichtung.

Es können auch mehrere Verschleißmarken über die Breite der Verbindungsstange angeordnet werden, um beispielsweise einen asymmetrischen oder ungleichmäßigen Verschleiß der Gabellasche anzuzeigen. Alternativ kann eine verlängerte Verschleißmarke vorgesehen werden, die eine teilkreisförmige Kontur aufweist und die Verschleißgrenze in Relation zu einem längeren Abschnitt der Außenkontur des überdeckenden Gabelschenkels anzeigt.

Im Folgenden wird die Erfindung anhand einer vorteilhaften Ausführungsform mit Bezug auf die Figuren beispielhaft erläutert. Dabei stellt die beschriebene Ausführungsform lediglich eine mögliche Ausgestaltung dar, die für den jeweiligen Anwendungsfall modifiziert werden kann. Einzelne, für sich vorteilhafte Merkmale können gemäß der obigen Beschreibung der vorteilhaften Ausgestaltungen der beschriebenen Ausführungsform hinzugefügt oder weggelassen werden.

Es zeigen:
- Fig. 1: eine schematische Perspektivansicht einer erfindungsgemäßen Gabellasche;
- Fig. 2: eine Seitenansicht einer erfindungsgemäßen Gabellasche;
- Fig. 3: eine Schnittansicht der erfindungsgemäßen Gabellasche an der Stele C-C der Figur 2;
- Fig. 4: eine Schnittansicht der erfindungsgemäßen Gabellasche an der Stelle G-G der Figur 2;
- Fig. 5: eine Schnittansicht der erfindungsgemäßen Gabellasche an der Stelle B-B der Figur 3;
- Fig. 6: eine abschnittsweise Darstellung von zwei Gabellaschen, wobei der Zapfen der einen Gabellasche in die Gelenkgabel der zweiten Gabellasche eingesetzt ist;
- Fig. 7: eine weitere abschnittsweise Darstellung von zwei efindungsgemäßen Gabellaschen, wobei der Zapfen der einen Gabellasche in die Gelenkgabel der zweiten Gabellasche eingesetzt ist.

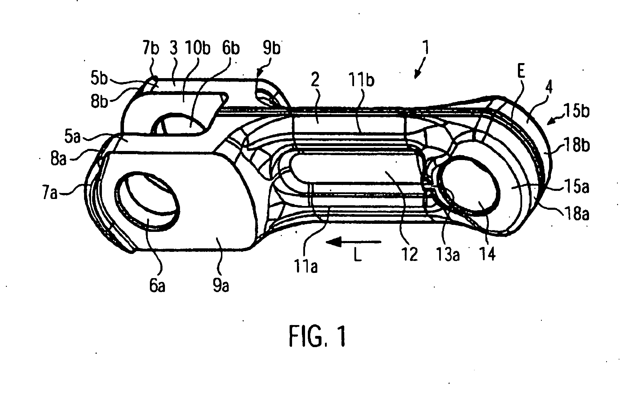

Zunächst wird der Aufbau einer erfindungsgemäßen Gabellasche mit Bezug auf die Figur 1 beschrieben, welche die erfindungsgemäße Gabellasche in einer schematischen Perspektivansicht zeigt.

Die Gabellasche ist symmetrisch zu einer Mittenebene E gestaltet, die einer Förderebene einer aus erfindungsgemäßen Gabellaschen 1 aufgebauten Förderkette entspricht. Die Förderebene ist durch die Bewegungsebene der Kettenglieder festgelegt, auf der sich miteinander verbundene Kettenglieder einer Förderkette bewegen. Die Gabellasche 1 weist eine Verbindungsstange 2 auf, die eine Gelenkgabel 3 mit einem Zapfen 4 verbindet. Die beiden Schenkel der Gelenkgabel 5a, 5b sind mit koaxialen Aussparungen 6a, 6b versehen. An den in Längsrichtung L gelegenen Enden der Gabelschenkel sind Verbreiterungsstege 7a, 7b vorgesehen, die mit den in Längsrichtung gelegenen Enden der Gabelschenkel 5a, 5b geschlossene Kettenradkontaktflächen 8a, 8b bilden. Die Verbreiterungsstege 7a, 7b weisen ein sichelförmiges Profil auf, wobei die Innenfläche der Sichel im Wesentlichen zur Achse der Aussparungen 6a, 6b orientiert ist. Die außenliegenden Kanten der sichelförmigen Verbreiterungsstege 7a, 7b, welche die Kettenradkontaktflächen 8a, 8b begrenzen, sind mit einem Radius verrundet. Die nach außen weisenden Flächen 9a, 9b der Gabelschenkel 5a, 5b, welche die Aussparungen 6a, 6b umgeben und an die sichelförmigen Verbreiterungsstege 7a, 7b grenzen, verlaufen parallel zueinander und zu den innenliegenden Flächen der Gabelschenkel 10a, 10b..

Die Verbindungsstange 2 ist randseitig mit Verstärkungswülsten 11 a, 11 b versehen, die sich von der Gelenkgabel 3 bis zum Zapfen 4 erstrecken. In einer Richtung quer zur Längserstreckung der Gabellasche sind die Verstärkungswulste 11a, 11b über einen schmalen Verbindungsabschnitt 12 verbunden. Die Übergänge der Verstärkungswulste 11a, 11 b zu der Gelenkgabel 3, zum Zapfen 4 und zum Verbindungsabschnitt 12 sind mit konkaven Radien versehen. Auf beiden Seiten der Verbindungsstange 2 ist an dem zum Zapfen 4 weisenden Ende eine Verschleißnase 13a, 13b vorgesehen, die in Richtung der Gelenkgabel 3 weist.

Der Zapfen 4 weist ein Gelenkauge 14 auf, dessen Symmetrielinie parallel zur Symmetrielinie der Aussparungen 6a, 6b verläuft. Das Gelenkauge 14 ist auf beiden Seiten des Zapfens 4 von ebenen Gleitflächen 15a, 15b umgeben, die parallel zu den nach außen weisenden Flächen der Gabelschenkel 9a, 9b bzw. der nach innen weisenden Flächen der Gabelschenkel 10a, 10b verlaufen. Die Außenflächen der Gabellasche, die im Wesentlichen quer zur Mittenebene E verlaufen, fallen von der Mittenebene E aus in Richtung der Symmetrieachsen der Aussparungen 6a, 6b bzw. des Gelenkauges 14 ab. Auf diese Weise bilden diese Flächen Teilflächen, die paarweise symmetrisch zueinander angeordnet sind und auf der Mittenebene E zusammentreffen.

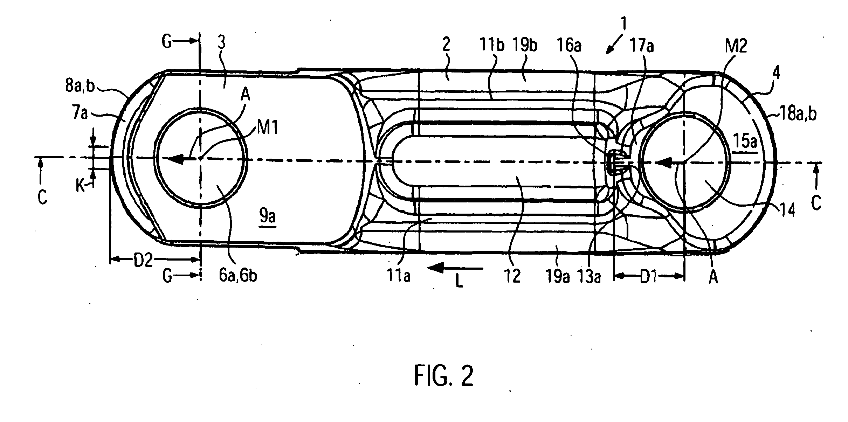

Figur 2 zeigt das Ausführungsbeispiel in einer Seitenansicht. Die Gabellasche 1 ist symmetrisch zu einer Symmetrielinie ausgestaltet, welche die Mittellinie M1 der Aussparungen 6a, 6b und die Mittellinie M2 des Gelenkauges 14 schneidet. Auf beiden Seiten der Verbindungsstange sind Verschleißnasen 13a, 13b vorgesehen, von denen die Verschleißnase 13a gezeigt ist. Die Verschleißnasen 13a, 13b sind auf ihrer der Gelenkgabel 3 zugewandten Seite mit Verschleißmarken 16a, 16b versehen, die als rechtwinklige Kerben 16a, 16b ausgeführt sind. Die Fläche der Kerbe 16a, 16b, die parallel zu den Mittellinien M1, M2 oder senkrecht zur Längserstreckung L verläuft, dient als Bezugsfläche zur Anzeige des Verschleißes. Den Verschleißmarken 16a, 16b ist jeweils ein Kontrollabschnitt K der Kettenradkontaktfläche zugeordnet.

Zusammen mit dem zugeordneten Kontrollabschnitt K der Kettenradkontaktfläche 8a, 8b markieren die Verschleißmarken 16a, 16b eine Verschleißgrenze Vg zweier gepaarter Gabellaschen 1. Die senkrecht zur Längsrichtung L verlaufende Fläche der Verschleißmarke 16a weist in einer Abstandsrichtung A einen Abstand D1 zur Mittellinie M2 des Gelenkauges 14 auf. Die Abstandsrichtung A verläuft parallel zur Mittenebene E, die in Fig. 2 der Zeichenebene entspricht. In derselben Abstandsrichtung A ist der größte Abstand D2 des Kontrollabschnittes K der Kettenradkontaktfläche 8a von der Mittellinie M1 der Aussparungen 6a, 6b größer als der Abstand D1. Durch die Differenz der Abstände D1 und D2 wird die Verschleißgrenze Vg = D2 - D1 abgebildet. Die Verschleißgrenze Vg ist ein vorbestimmter Wert, der beispielsweise das Verschleißmaß der Gabellaschen 1 darstellt, bis zu dem ein sicherer Einsatz einer Förderkette aus erfindungsgemäßen Gabellaschen 1 gewährleistet ist.

Sowohl der Kontrollabschnitt K als auch die Verschleißmarke 16a liegen auf einer Linie, welche die Mittellinien M1 und M2 schneidet. Damit wird der Verschleiß benachbarter Gabellaschen 1 in Längsrichtung bestimmt. Dies entspricht einer Messung der Kettenlängung, wobei zusätzlich der Abrieb an den Kettenradkontaktflächen 8a, 8b berücksichtigt wird.

Die Verschleißnase 13a grenzt an die das Gelenkauge 14 umgebende Gleitfläche 15a und unterbricht den Rundungsradius des Randes, der die Gleitfläche 15a von außen umgibt. Die Verschleißnase 13a ist auf einem dem Gelenkauge 14 vorgelagerten Wulst angeordnet, durch den die Nase in Richtung der Gelenkgabel 3 zusätzlich herausragt.

Die Kettenradkontaktflächen der Gelenkgabel 8a, 8b und die das Gelenkauge 14 umgebenden Flächen 18a, 18b sind konvexe Kegelflächen, die sich in Richtung der Mittenebene E erweitern. An den sich in Längsrichtung L erstreckenden Seiten weist die Verbindungsstange Zentrierflächen 19a, 19b auf, die zur Außenseite hin angeschrägt sind.

Der Verbreiterungssteg 7a der Kettenradkontaktfläche 8a weist im mittleren Abschnitt einen größeren Querschnitt auf als an seinen seitlichen Abschnitten, deren Querschnitt sich zum Ende hin verjüngt. Dieses veränderliche Profil des Verbreiterungssteges 7a entspricht einer Anpassung an die Beanspruchung der Kettenradkontaktfläche 8a, die insbesondere in Längsrichtung L der Gabellasche 1 belastet wird. Der Querschnitt des Verbreiterungssteges 7a ist an die Größe der auf ihn wirkenden Lasten und an den damit auftretenden Verschleiß angepasst. Dadurch wird das Materialvolumen an den Kettenradkontaktflächen 8a, 8b bei gleicher Kraftübertragung verringert.

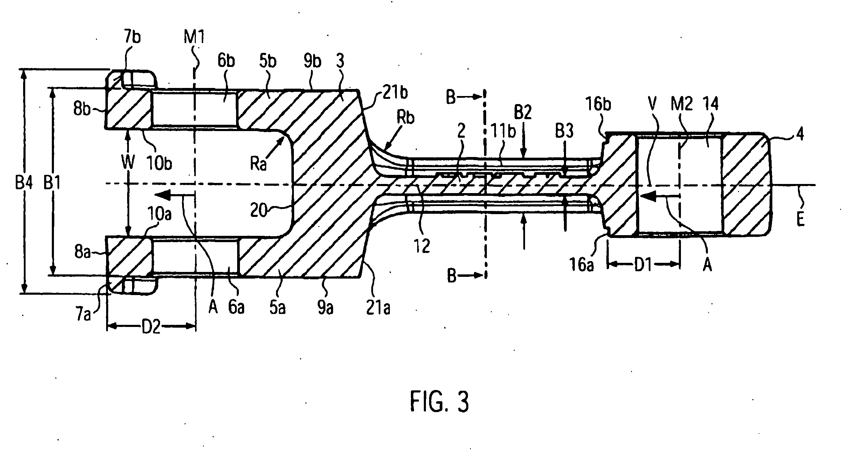

Figur 3 zeigt eine Schnittansicht der erfindungsgemäßen Gabellasche, deren Schnitt an der Stelle C-C der Figur 2 angeordnet ist. Die Gabellasche 1 ist symmetrisch zu einer Symmetrielinie gestaltet, die durch eine Verbindungsgerade V definiert ist, welche auf der Mittenebene E liegt und die Mittellinie M1 der Aussparungen 5a, 5b in den Gabelschenkeln 6a, 6b mit der Mittellinie M2 des Gelenkauges 14 verbindet.

Die Gabelschenkel 5a, 5b sind in einem Abstand W voneinander angeordnet, so dass zwischen den Innenflächen der Gabelschenkel 10a, 10b eine lichte Weite W vorgesehen ist.
Die Innenflächen 10a, 10b der Gabelschenkel 5a, 5b gehen an dem innenliegenden Ende der Gabelschenkel 5a, 5b in eine Bodenfläche 20 über. Zwischen den zueinander parallelen Innenflächen 10a, 10b und der Bodenfläche 20 ist jeweils ein Radius Ra vorgesehen, der größer oder gleich einem Sechstel der lichten Weite W ist.

Die innen- und außenliegenden Öffnungen der Aussparungen 6a, 6b in den Gabelschenkeln 5a, 5b sowie beide Öffnungen des Gelenkauges 14 an dem Zapfen 4 sind mit Fasen versehen. Wird der Zapfen 4 in die lichte Weite einer Gelenkgabel 3 eingesetzt, erleichtern diese Fasen das Durchstecken eines hier nicht dargestellten Gelenkbolzens. Durch den Gelenkbolzen entsteht eine gelenkige Verbindung zwischen einem Zapfen 4 und einer benachbarten Gelenkgabel 3, die eine Rotation der verbundenen Elemente auf der Ebene E erlaubt.

Die Gelenkgabel 3 weist an den die Aussparungen 6a, 6b umgebenden Flächen 9a, 9b eine Breite B1 auf, die deutlich größer ist als die äußere Breite B2 der Verbindungsstange 2, die den Abstand zwischen den außenliegenden Flächen der Verstärkungswülste 11a, 11 b darstellt. Der schmale Verbindungsabschnitt 12 der Verbindungsstange 2, der zwischen den Verstärkungswülsten 11a, 11 b angeordnet ist, weist eine Breite B3 auf, die etwa einem Drittel der Breite B2 eines Verstärkungswulstes 11 a, 11 b entspricht. An dem Übergang von der Gelenkgabel 3 zu der Verbindungsstange 2 ist die Gelenkgabel mit schrägen Flächen 21 a, 21 b versehen, die in Richtung der Verbindungsstange 2 abfallen. Über einen Radius Rb sind die schrägen Flächen 21 a, 21 b mit den Verstärkungswülsten 11a, 11 b verbunden. Der Radius Rb an dem Übergang von der Fläche 21 b bzw. 21a zu dem Scheitel des Verstärkungswulstes 11a bzw. 11 b ist etwas größer als das 5,8-fache des Verhältnisses der Breite B1 der Gelenkgabel zur Breite B2 der Verstärkungswülste in der Einheit [mm].

Der Zapfen 4 umfasst an seiner der Gelenkgabel 3 zugewandten Seite Verschleißnasen 13a, 13b, die mit Verschleißmarken 16a, 16b in Form von Kerben 16a, 16b versehen sind.

Die von dem Zapfen 4 weggewandten Enden der Gabelschenkel 5a, 5b sind mit Verbreiterungsstegen 7a, 7b verbreitert. Die Breite B4 der Gelenkgabel 3 an den Verbreiterungsstegen 7a, 7b entspricht etwa dem 1,2-fachen der Breite B1 der Gelenkgabel 3 an den Flächen 9a, 9b. Die Kettenradkontaktflächen 8a, 8b der Gelenkgabel 3 sind auf diese Weise vergrößert, wodurch sich bei einer Paarung mit entsprechend großen Kettenradflächen eine geringere Flächenpressung ergibt. Die Verbreiterungsstege 7a, 7b umgeben wenigstens abschnittsweise die Aussparungen 6a, 6b. Die Enden eines in die Aussparungen 6a, 6b eingelegten Gelenkbolzens werden bei einem Eingriff eines Kettenrades in die Kettenradkontaktflächen 8a, 8b durch die Verbreiterungsstege 7a, 7b vor Beschädigungen geschützt, die durch auf das Kettenrad gelangtes Fördergut entstehen können, wenn dieses in Richtung des Bolzens gedrückt wird. Die Kettenradkontaktflächen 8a, 8b der Gelenkgabel 3 sind kegelig geformt, wobei sich der Radius der Kettenkontaktflächen 8a, 8b in Richtung der Mittenebene E vergrößert. Diese konvexe kegelige Form der Kettenradkontaktflächen 8a, 8b kann genutzt werden, um die Gabellasche 1 bei einem Eingriff eines Kettenrades mit einer entsprechend konkav geformten kegeligen Kontaktfläche auf dem Kettenrad zu zentrieren.

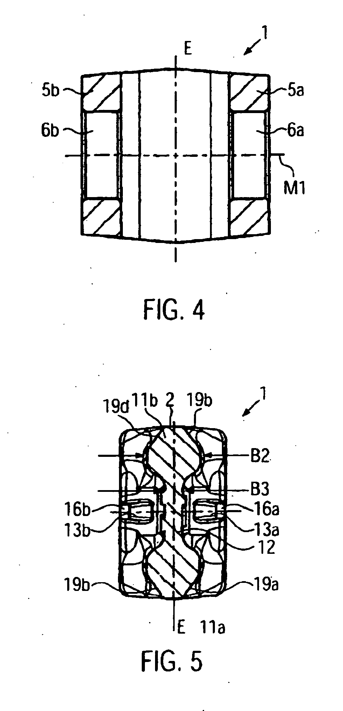

Figur 4 zeigt eine schematische Schnittansicht der erfindungsgemäßen Gabellasche 1 an der Stelle A-A der Figur 2. Die Gelenkgabel 3 ist symmetrisch zur Mittenebene E aufgebaut. Die Höhe der Gabelschenkel nimmt von der Außenseite der Gelenkgabel 3 in Richtung der Mittenebene E beidseitig zu. Aufgrund dieser Höhenzunahme sind die Kettenradkontaktflächen 8a, 8b kegelig geformt. Die Höhe nimmt ebenso an jeder anderen Stelle der Gabellasche 1 von einer Seitenfläche ausgehend in Richtung der Mittenebene E zu und erreicht an der Mittenebene E ihren höchsten Wert. Durch diesen Höhenverlauf wird die Entformung der Gabellasche nach dem Schmieden bzw. nach dem Gießen der Gabellasche erleichtert.

Figur 5 zeigt eine Schnittansicht der erfindungsgemäßen Gabellasche an der Stelle B-B der Figur 3. Das Profil der Verbindungsstange 2 ist vierfach symmetrisch zu einem Mittelpunkt ausgestaltet, der auf der Mittenebene E liegt. Die Verbindungsstange 2 weist an dieser Stelle ein hantelförmiges Profil auf, das durch die Verstärkungswülste 11a, 11b und den dazwischen liegenden schmalen Verbiridungsabschnitt 12 gebildet wird. Auf beiden Seiten des schmalen Verbindungsabschnittes 12, an den Übergängen zu den Verstärkungswülsten 11a, 11b, erweitert sich das Profil der Verbindungstange 2 aufgrund der vorgesehenen konkaven Radien trichterförmig, bis es über konvexe Radien in gerade Abschnitte der Verstärkungswülste übergeht, die im Wesentlichen parallel zur Mittenebene E verlaufen. An den geraden Abschnitten weisen die Verstärkungswülste eine Breite B2 auf, die etwa dem dreifachen der Breite B3 des Verbindungsabschnittes 12 entspricht. Zu den Schmalseiten der Verbindungsstange 12 hin verläuft das Profil der Verbindungsstange trichterfomig, wobei sich das Profil nach außen hin verjüngt. Das trichterförmige Profil wird an diesen Abschnitten durch die Zentrierflächen 19a, 19b, 19c, 19d gebildet.

Die Zentrierflächen 19a, 19b, 19c, 19d an den außenliegenden Enden der Verstärkungswülste 11a, 11b sorgen bei einem Eingriff eines Kettenrades in die Gabellaschenkette für eine Zentrierung der Gabellasche 1 auf dem Kettenrad. Die Zentrierflächen 19a, 19b, 19c, 19d sind symmetrisch zur Mittenebene E angeordnet und erstrecken sich aus der Richtung des Verbindungsabschnittes 12 kommend in Richtung der Mittenebene E.

Auf beiden Seiten des schmalen Verbindungsabschnittes 12 sind an dem Zapfen 4 Verschleißnasen 13a, 13b angeordnet, in die Verschleißmarken 16a, 16b in Form von rechtwinkligen Kerben 16a, 16b eingebracht sind. Die Verschleißnasen 16a, 16b treten jeweils mit Abstand seitlich vom Verbindungsabschnitt 12 aus dem Radius heraus, der den Übergang zwischen der Verbindungsstange 2 und dem Zapfen 4 bildet.

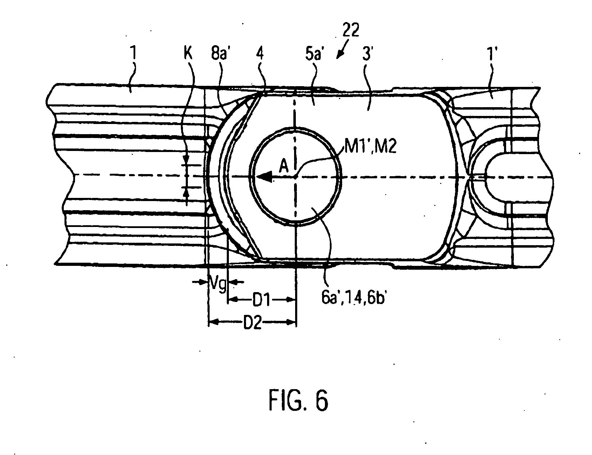

Figur 6 zeigt einen Abschnitt einer erfindungsgemäßen Gabellaschenkette 22. Der Zapfen einer Gabellasche 1 ist in die Gelenkgabel 3' einer benachbarten Gabellasche 1' eingeführt. Die Gelenkgabel 3' und der Zapfen 4 sind über einen nicht dargestellten Bolzen, der durch die Aussparungen 6a', 6b' und das Gelenkauge 14 die Gelenkgabel 3' und den Zapfen 4 durchdringt, drehbar verbunden. Die gezeigten Gabellaschen 1, 1' sind nicht verschlissen. Aus einer Betrachtungsrichtung oder einer Projektionsrichtung, die im Wesentlichen quer zur Mittenebene E verläuft, ist die Verschleißmarke 16a durch den Kontrollabschnitt K der Kettenradkontaktfläche 8a' verdeckt. Der größte Abstand D2 der Kettenradkontaktfläche 8a' von der Mittellinie M1' der Aussparungen 6a, 6b in Abstandsrichtung A ist größer als der Abstand D1 der Verschleißmarke 16a, 16b von der Mittellinie M2 des Gelenkauges in Abstandsrichtung A. Durch die Differenz der Abstände D1, D2 wird eine Verschleißgrenze Vg = D2 - D1 definiert. Da die gezeigten Gabellaschen 1, 1' über einen Bolzen verbunden sind, liegen die Ebenen und die Mittellinien M1', M2 aufeinander und die Verschleißmarke 16a ist in einer Projektionsrichtung oder Betrachtungsrichtung, die senkrecht zur Mittenebene E verläuft, durch den Gabelschenkel 5a' verdeckt.

Ein Verschleiß der Gelenkflächen an der gelenkigen Verbindung zwischen Zapfen 4 und Gelenkgabel 3' kann zu einer Längung der Aussparungen 6a', 6b' oder des Gelenkauges 14 führen. Außerdem kann sich der Querschnitt des eingelegten Gelenkbolzens verringern. Diese Verschleißerscheinungen können zu einer Verschiebung der Gelenkachsen und damit der Mittellinien M1', M2 führen. Zusätzlich kann an der Kettenradkontaktfläche 8a', 8b' Abrieb entstehen, durch den sich die Kettenradkontaktfläche 8a', 8b' in Richtung der Mittellinien M1', M2 oder in Richtung der Gelenkachse verschiebt.

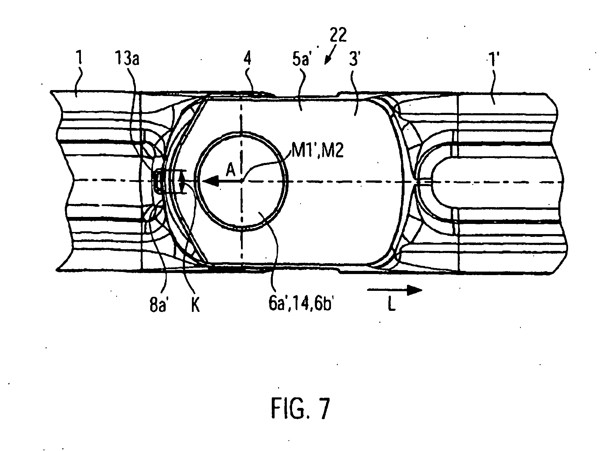

Figur 7 zeigt eine weitere schematische Seitenansicht einer Gabellasche 1 der erfindungsgemäßen Gabellaschenkette 22, die mit einer benachbarten Gabellasche 1' über einen nicht dargestellten Gelenkbolzen verbunden ist. Die gezeigten Gabellaschen 1, 1' haben die Verschleißgrenze Vg erreicht. Sie sind an den innenliegenden Flächen der Aussparungen 6a', 6b' bzw. des Gelenkauges 14, die in Verbindung mit dem nicht dargestellten Gelenkbolzen als Gelenkflächen dienen, verschlissen. Die Flächen des nicht dargestellten Gelenkbolzens sind, an den entsprechend gegenüberliegenden Flächen verschlissen. Aufgrund des durch den Verschleiß entstehenden Materialabtrags ist der Zapfen 4 aus der Gelenkgabel 3' in Längsrichtung L herausbewegt. Zusätzlich entsteht Verschleiß an den Kettenradkontaktflächen 8a', 8b' der Gelenkgabel 3', wodurch sich die Länge der Gabelschenkel 5a', 5b' insgesamt verkürzt.

Ist die Verschleißgrenze Vg einer Kette aus erfindungsgemäßen Gabellaschen 1 erreicht, tritt die Verschleißmarke 16a unter dem Gabelschenkel 5a' hervor. Die senkrechte Fläche der rechtwinkligen Kerbe 16a, welche die Verschleißmarke 16a bildet, dient dabei als Bezügsfläche, um die Verschleißgrenze der Gabellaschenkette 22 anzuzeigen. Dieser Bezugsfläche ist ein Kontrollabschnitt des darüber liegenden Gabelschenkels 5a' zugeordnet, der bei unverschlissenen Gabellaschen 1 die Verschleißmarke 16a verdeckt und die Verschleißmarke 16a bei Erreichen einer durch die Lage der Verschleißmarke 16a vorgegebenen Verschleißgrenze Vg freigibt. Aus einer Betrachtungsrichtung oder einer Projektionsrichtung, die im Wesentlichen quer zur Mittenebene E verläuft, ist die Verschleißmarke 16a nun nicht mehr durch den Kontrollabschnitt K der Kettenradkontaktfläche 8a' verdeckt. Der größte Abstand D2 der Kettenradkontaktfläche 8a' von der Mittellinie M1' der Aussparungen 6a, 6b in Abstandsrichtung A entspricht etwa dem Abstand D1 der Verschleißmarke 16a, 16b von der Mittellinie M2 des Gelenkauges in Abstandsrichtung A.

Die Verschleißmarke 16a und der Kontrollabschnitt K liegen auf einer Ebene, welche durch die Mittellinien M1 und M2 aufgespannt wird. Alternativ können die Verschleißmarke 16a und der Kontrollabschnitt K der Kettenradkontaktfläche 8a oberhalb oder unterhalb dieser Ebene liegen. Auf diese Weise kann der Verschleiß an den Kettenradkontakflächen oder den Gelenkflächen der Gabellasche 1 oder der die Gabellaschen 1 verbindenden Gelenkbolzen auch seitlich oder schräg zur Längsrichtung L bestimmt werden.

Es können auch mehrere Verschleißmarken 16a, 16b über die Breite der Verbindungsstange 2 angeordnet werden, um beispielsweise einen asymmetrischen oder ungleichmäßigen Verschleiß der Gabellasche 1 anzuzeigen. Alternativ kann eine verlängerte Verschleißmarke 16a, 16b vorgesehen werden, deren Profil in einer Betrachtungsrichtung quer zur Mittenebene E an die Außenkontur der sie überdeckenden Kettenradkontaktfläche 8a, 8b angepasst ist und die Verschleißgrenze auch bei einem örtlich begrenzten Verschleiß des überdeckenden Gabelschenkels 5a' anzeigt.

## Patentansprüche

1. Gabellasche (1, 1') für eine Gabellaschenkette (22)
mit einer Verbindungsstange (2), an deren einem Ende eine Gelenkgabel (3, 3') mit zwei in Längsrichtung (L) in Kettenradkontaktflächen (8a, 8b) endenden Gabelschenkeln (5a, 5a', 5b) angeordnet ist, wobei die Gabelschenkel (5a, 5a', 5b) jeweils wenigstens eine Aussparung (6a, 6a', 6b, 6b') aufweisen, die koaxial zu der Aussparung (6a, 6a', 6b, 6b') des jeweils anderen Gabelschenkels (5a, 5a', 5b) angeordnet ist und sich im Wesentlichen senkrecht zu einer Mittenebene (E) erstreckt,
und an deren anderem Ende ein Zapfen (4) mit wenigstens einem Gelenkauge (14) angeordnet ist, **dadurch gekennzeichnet, dass** in einer Richtung quer zur Längsrichtung (L) der Gabellasche (1, 1') die Verbindungsstange (2) im Querschnitt randseitig mit zwei durch einen Verbindungsabschnitt (12) verbundenen Verstärkungswülsten (11a, 11b) versehen ist und dass an den in Längsrichtung (L) gelegenen Enden der Gabelschenkel (5a, 5a', 5b) Kettenradkontaktflächen (8a, 8b) vorgesehen sind, die jeweils durch einen quer zur Längsrichtung (L), in Richtung der Mittellinie (M1, M1') der Aussparungen (6a, 6a', 6b, 6b') vorspringenden, randseitig angeordneten Verbreiterungssteg (7a, 7b) verbreitert sind.

2. Gabellasche (1, 1') nach Anspruch 1, **dadurch gekennzeichnet, dass** die Verstärkungswulste (11a, 11b) sich in Längsrichtung (L) von der Gelenkgabel (3, 3') bis zu dem Gelenkauge (4) erstrecken.

3. Gabellasche (1, 1') nach Anspruch 1 oder 2, **dadurch gekennzeichnet, dass** die Verstärkungswulste (11a, 11b) symmetrisch zu einer Verbindungsgeraden (V) ausgestaltet sind, die parallel zur Mittenebene (E) verlaufend die Mittellinie (M1, M1') der Aussparungen (6a, 6a', 6b, 6b') in den Gabelschenkeln (5a, 5a', 5b) mit der Mittellinie (M2) des Gelenkauges (14) verbindet.

4. Gabellasche (1, 1') nach einem der oben genannten Ansprüche, **dadurch gekennzeichnet, dass** die Verbindungsstange (2) vollflächig mit einer geschmiedeten Oberfläche versehen ist.

5. Gabellasche (1, 1') nach einem der oben genannten Ansprüche, **dadurch gekennzeichnet, dass** der Verbreiterungssteg (7a, 7b) in der Richtung der Aussparungen ein sichelförmiges Profil aufweist.

6. Gabellasche (1, 1') nach einem der oben genannten Ansprüche, **dadurch gekennzeichnet, dass** die Kettenradkontaktflächen (8a, 8b) der Gabelschenkel (5a, 5a', 5b) geschmiedet sind.

7. Gabellasche (1, 1') nach einem der oben genannten Ansprüche, **dadurch gekennzeichnet, dass** an wenigstens einer Schmalseite der Verbindungsstange (2) zumindest zwei sich in Längsrichtung (L) erstreckende Zentrierflächen (19a, 19b, 19c, 19d) angeordnet sind, die schräg zur Mittenebene (E) verlaufen.

8. Gabellasche (1, 1') nach Anspruch 7, **dadurch gekennzeichnet, dass** die Zentrierflächen (19a, 19b, 19c, 19d) symmetrisch zu einer Verbindungsgeraden (V) angeordnet sind, die parallel zur Mittenebene (E) verlaufend die Mittellinie (M1, M1') der Aussparungen (6a, 6a', 6b, 6b') in den Gabelschenkeln (5a, 5a', 5b) mit der Mittellinie (M2) des Gelenkauges (14) verbindet.

9. Gabellasche (1, 1') nach Anspruch 7 oder 8, **dadurch gekennzeichnet, dass** die Zentrierflächen (19a, 19b, 19c, 19d) von den Verstärkungswülsten (11a, 11b) gebildet sind.

10. Gabellasche (1, 1') nach einem der oben genannten Ansprüche, **dadurch gekennzeichnet, dass** die Verbindungsstange (2) in Bezug auf eine Verbindungsgerade (V), die parallel zur Mittenebene (E) verlaufend die Mittellinie (M1, M1') der Aussparungen (6a, 6a', 6b, 6b') in den Gabelschenkeln (5a, 5a', 5b) mit der Mittellinie (M2) des Gelenkauges (14) verbindet, vierfach symmetrisch ausgestaltet ist.

11. Gabellasche (1, 1') nach einem der oben genannten Ansprüche, **dadurch gekennzeichnet, dass** die Breite (B1) der Gelenkgabel (3, 3') größer ist als die Breite (B2) der Verbindungsstange (2), wobei der Radius (Rb) an dem Übergang zwischen der Gelenkgabel (3, 3') und den Verstärkungswülsten (11a, 11b) größer als das 5,8-fache des Verhältnisses der Breite (B1) der Gelenkgabel (3, 3') zur Breite (B2) der Verbindungsstange (2) ist.

12. Gabellasche (1, 1') nach einem der oben genannten Ansprüche, **dadurch gekennzeichnet, dass** der Radius (Ra) an den in der Gelenkgabel liegenden Enden der Gabelschenkel (5a, 5a', 5b) größer als 1/6 der lichten Weite (W) zwischen den Gabelschenkeln (5a, 5a',5b) ist.

13. Gabellasche (1, 1') nach einem der oben genannten Ansprüche, **dadurch gekennzeichnet, dass** die Gabellasche (1) an wenigstens einer einem Gabelschenkel (5a, 5a', 5b) zugeordneten Seite eine gegenüber ihrer wenigstens unmittelbaren Umgebung unterschiedlich ausgestaltete Verschleißmarke (16a, 16b) aufweist, deren Abstand (D1) von der Mittellinie (M2) des Gelenkauges (14) in einer parallel zur Mittenebene (E) verlaufenden Abstandsrichtung (A) kleiner ist als der größte Abstand (D2) eines Kontrollabschnittes (K) der Kettenradkontaktfläche (8a, 8b) von der Mittellinie (M1, M1') der Aussparungen (6a, 6b) in Abstandsrichtung (A).

## Claims

1. Fork link (1,1') for a fork link chain (22)
comprising a connecting rod (2) on one end of which a clevis (3, 3') with two fork legs (5a, 5a', 5b) ending in chain wheel contact faces (8a, 8b) in the longitudinal direction (L) is arranged, wherein the fork legs (5a, 5a', 5b) each comprise at least one recess (6a, 6a', 6b, 6b') which is arranged coaxially to the recess (6a, 6a', 6b, 6b') of the respective other fork leg (5a, 5a', 5b) and extends substantially perpendicularly to a centre plane (E),
and at its other end is arranged a pin (4) with at least one rod eye clevis (14), **characterised in that** in a direction transverse to the longitudinal direction (L) of the fork link (1, 1') the connecting rod (2) is provided in cross-section and at the edge with two reinforcing beads (11a, 11b) connected by a connecting section (12), and **in that** chain wheel contact faces (8a, 8b) are provided at the ends of the fork legs (5a, 5a', 5b) located in the longitudinal direction (L), the faces each being widened by a widening web (7a, 7b) arranged at the edge and projecting transversely to the longitudinal direction (L) in the direction of the centre line (M1, M1') of the recesses (6a, 6a', 6b, 6b').

2. Fork link (1, 1') according to claim 1, **characterised in that** the reinforcing beads (11a, 11b) extend in the longitudinal direction (L) from the clevis (3, 3') to the rod eye clevis (14).

3. Fork link (1, 1') according to claim 1 or 2, **characterised in that** the reinforcing beads (11a, 11b) are designed so as to be symmetrical to a straight connecting line (V) which, running parallel to the centre plane (E), connects the centre line (M1, M1') of the recesses (6a, 6a', 6b, 6b') in the fork legs (5a, 5a', 5b) to the centre line (M2) of the rod eye clevis (14).

4. Fork link (1, 1') according to any one of the preceding claims, **characterised in that** the connecting rod (2) is provided with a forged surface all over.

5. Fork link (1, 1') according to any one of the preceding claims, **characterised in that** the widening web (7a, 7b) has a crescent-shaped profile in the direction of the recesses.

6. Fork link (1, 1') according to any one of the preceding claims, **characterised in that** the chain wheel contact faces (8a, 8b) of the fork legs (5a, 5a', 5b) are forged.

7. Fork link (1, 1') according to any one of the preceding claims, **characterised in that** at least two centring faces (19a, 19b, 19c, 19d) extending in the longitudinal direction (L) are arranged on at least one narrow side of the connecting rod (2) and these run obliquely to the centre plane (E).

8. Fork link (1, 1') according to claim 7, **characterised in that** the centring faces (19a, 19b, 19c, 19d) are arranged symmetrically to a straight connecting line (V) which, running parallel to the centre plane (E), connects the centre line (M1, M1') of the recesses (6a, 6a', 6b, 6b') in the fork legs (5a, 5a', 5b) to the centre line (M2) of the rod eye clevis (14).

9. Fork link (1, 1') according to claim 7 or 8, **characterised in that** the centring faces (19a, 19b, 19c, 19d) are formed from the reinforcing beads (11a, 11b).

10. Fork link (1, 1') according to any one of the preceding claims, **characterised in that** in relation to a straight connecting line (V) which, running parallel to the centre plane (E), connects the centre line (M1, M1') of the recesses (6a, 6a', 6b, 6b') in the fork legs (5a, 5a', 5b) to the centre line (M2) of the rod eye clevis (14), the connecting rod (2) is designed so as to be quadruply symmetrical.

11. Fork link (1, 1') according to any one of the preceding claims, **characterised in that** the width (B1) of the clevis (3, 3') is greater than the width (B2) of the connecting rod (2), wherein the radius (Rb) at the transition between the clevis (3, 3') and the reinforcing beads (11a, 11b) is greater than 5.8 times the ratio of the width (B1) of the clevis (3, 3') to the width (B2) of the connecting rod (2).

12. Fork link (1, 1') according to any one of the preceding claims, **characterised in that** the radius (Ra) at the ends of the fork legs (5a, 5a', 5b) located in the clevis is greater than 1/6 of the inside width (W) between the fork legs (5a, 5a', 5b).

13. Fork link (1, 1') according to any one of the preceding claims, **characterised in that** on at least one side associated with a fork leg (5a, 5a', 5b) the fork link (1) comprises a wear mark (16a, 16b) designed to be different from at least its immediate surroundings, the spacing (D1) of which mark from the centre line (M2) of the rod eye clevis (14) is smaller in a spacing direction (A) running parallel to the centre plane (E) than the greatest spacing (D2) of the control section (K) of the chain wheel contact face (8a, 8b) from the centre line (M1, M1') of the recesses (6a, 6b) in the spacing direction (A).

## Revendications

1. Maillon à chape (1, 1') pour une chaîne de maillons à chape (22)
avec une tige de liaison (2) à une extrémité de laquelle est disposée une chape d'articulation (3, 3') avec deux branches de chape (5a, 5a', 5b) qui se terminent dans le sens longitudinal (L) par des surfaces de contact pour roue à chaîne (8a, 8b), étant précisé que lesdites branches (5a, 5a', 5b) présentent chacune au moins un évidement (6a, 6a', 6b, 6b') qui est disposé coaxialement par rapport à l'évidement (6a, 6a', 6b, 6b') de l'autre branche (5a, 5a', 5b) et qui s'étend globalement perpendiculairement à un plan médian (E),
et à l'autre extrémité de laquelle est disposé un tourillon (4) avec au moins un oeil d'articulation (14), **caractérisé en ce que** dans un sens transversal par rapport au sens longitudinal (L) du maillon à chape (1, 1'), la tige de liaison (2) est pourvue en coupe transversale, du côté du bord, de deux renflements de renforcement (11a, 11b) reliés par une section de liaison (12), et **en ce qu'**il est prévu sur les extrémités des branches (5a, 5a', 5b) situées dans le sens longitudinal (L) des surfaces de contact pour roue à chaîne (8a, 8b) qui sont élargies chacune par une nervure d'élargissement (7a, 7b) disposée du côté du bord et saillant transversalement par rapport au sens longitudinal (L), dans le sens de l'axe médian (M1, M1') des évidements (6a, 6a', 6b, 6b').

2. Maillon à chape (1, 1') selon la revendication 1, **caractérisé en ce que** les renflements de renforcement (11a, 11b) s'étendent jusqu'à l'oeil d'articulation (4), dans le sens longitudinal (L) de la chape d'articulation (3, 3').

3. Maillon à chape (1, 1') selon la revendication 1 ou 2, **caractérisé en ce que** les renflements de renforcement (11a, 11b) sont symétriques par rapport à une droite de liaison (V) qui, en s'étendant parallèlement au plan médian (E), relie l'axe médian (M1, M1') des évidements (6a, 6a', 6b, 6b') prévus dans les branches (5a, 5a', 5b) à l'axe médian (M2) de l'oeil d'articulation (14).

4. Maillon à chape (1, 1') selon l'une des revendications précédentes, **caractérisé en ce que** la tige de liaison (2) est pourvue sur toute sa surface d'une surface forgée.

5. Maillon à chape (1, 1') selon l'une des revendications précédentes, **caractérisé en ce que** la nervure d'élargissement (7a, 7b) présente dans le sens des évidements un profil en forme de croissant.

6. Maillon à chape (1, 1') selon l'une des revendications précédentes, **caractérisé en ce que** les surfaces de contact pour roue à chaîne (8a, 8b) des branches (5a, 5a', 5b) sont forgées.

7. Maillon à chape (1, 1') selon l'une des revendications précédentes, **caractérisé en ce que** sur au moins un côté étroit de la tige de liaison (2) sont disposées au moins deux surfaces de centrage (19a, 19b, 19c, 19d) qui s'étendent dans le sens longitudinal (L) et qui s'étendent en biais par rapport au plan médian (E).

8. Maillon à chape (1, 1') selon la revendication 7, **caractérisé en ce que** les surfaces de centrage (19a, 19b, 19c, 19d) sont disposées symétriquement par rapport à une droite de liaison (V) qui, en s'étendant parallèlement au plan médian (E), relie l'axe médian (M1, M1') des évidements (6a, 6a', 6b, 6b') prévus dans les branches (5a, 5a', 5b) à l'axe médian (M2) de l'oeil d'articulation (14).

9. Maillon à chape (1, 1') selon la revendication 7 ou 8, **caractérisé en ce que** les surfaces de centrage (19a, 19b, 19c, 19d) sont formées par les renflements de renforcement (11a, 11b).

10. Maillon à chape (1, 1') selon l'une des revendications précédentes, **caractérisé en ce que** la tige de liaison (2) est formée avec une quadruple symétrie par rapport à une droite de liaison (V) qui, en s'étendant parallèlement au plan médian (E), relie l'axe médian (M1, M1') des évidements (6a, 6a', 6b, 6b') prévus dans les branches (5a, 5a', 5b) à l'axe médian (M2) de l'oeil d'articulation (14).

11. Maillon à chape (1, 1') selon l'une des revendications précédentes, **caractérisé en ce que** la largeur (B1) de la chape d'articulation (3, 3') est supérieure à la largeur (B2) de la tige de liaison (2), étant précisé que le rayon (Rb) au niveau de la transition entre la chape d'articulation (3, 3') et les renflements de renforcement (11a, 11b) est supérieur à 5,8 fois le rapport de la largeur (B1) de la chape d'articulation (3, 3') sur la largeur (B2) de la tige de liaison (2).

12. Maillon à chape (1, 1') selon l'une des revendications précédentes, **caractérisé en ce que** le rayon (Ra) au niveau des extrémités des branches (5a, 5a', 5b) situées dans la chape d'articulation est supérieur à 1/6 de l'ouverture (W) entre lesdites branches (5a, 5a', 5b).

13. Maillon à chape (1, 1') selon l'une des revendications précédentes, **caractérisé en ce que** le maillon à chape (1) présente sur au moins un côté associé à une branche (5a, 5a', 5b) un repère d'usure (16a, 16b) qui a une forme différente par rapport à son environnement au moins immédiat et dont l'écartement (D1) par rapport à l'axe médian (M2) de l'oeil d'articulation (14) dans un sens d'écartement (A) parallèle à l'axe médian (E) est plus petit que l'écartement maximal (D2) d'une section de contrôle (K) de la surface de contact pour roue à chaîne (8a, 8b) par rapport à l'axe médian (M1, M1') des évidements (6a, 6b) dans le sens d'écartement (A).
